# EUROPÄISCHE PATENTSCHRIFT

(11) **EP 3 362 383 B1**
(45) Veröffentlichungstag und Bekanntmachung des Hinweises auf die Patenterteilung: **27.05.2020**
(21) Anmeldenummer: 16782044.8
(22) Anmeldetag: 13.10.2016
(51) Int. Cl.: B65G 47/51, B65G 29/00

(54) **ZWISCHENSPEICHEREINRICHTUNG UND VERFAHREN ZUR ZWISCHENSPEICHERUNG**
TEMPORARY STORAGE DEVICE AND METHOD FOR TEMPORARY STORAGE
DISPOSITIF DE STOCKAGE INTERMÉDIAIRE ET PROCÉDÉ DE STOCKAGE INTERMÉDIAIRE

(30) Priorität: 16.10.2015 DE 102015117669
(43) Veröffentlichungstag der Anmeldung: 22.08.2018
(73) Patentinhaber: Finatec Holding AG, 2555 Brügg bei Biel (CH)
(72) Erfinder: MAIBACH, Fridolin, 2553 Safnern (CH); HERMLE, Matthias, 2555 Brügg bei Biel (CH); KUBALEK, Bernhard, 4588 Unterramsern (CH); GERBER, Martin, 2505 Biel (CH); GRÄSER, Christian, 8340 Hinwil (CH)
(74) Vertreter: Hoppe, Lars
(86) Internationale Anmeldenummer: PCT/EP2016/074592
(87) Internationale Veröffentlichungsnummer: WO 2017/064186

(56) Entgegenhaltungen:
- EP-A1- 2 733 096
- EP-A2- 0 050 892
- WO-A2-2014/192985
- JP-A- 2009 102 107
- JP-A- 2010 058 883
- US-A- 774 177
- US-A- 3 300 022
- US-A- 3 640 373
- US-A- 5 234 098

## Beschreibung

Die vorliegende Erfindung liegt auf dem technischen Gebiet der Maschinen zur Herstellung und Weiterverarbeitung von Verschlüssen, insbesondere Schraubverschlüssen, wie sie beispielsweise bei PET-Flaschen verwendet werden. Insbesondere liegt die Erfindung auf dem Gebiet des Transports dieser Verschlüsse zwischen den einzelnen Handlingstationen mittels einer Vorrichtung und einem Verfahren.

Verschlüsse werden entweder aus Metall oder aus Kunststoff gefertigt, wobei letztere üblicherweise in einer Spritzgussmaschine hergestellt, ausgeworfen, beim anschließenden Weitertransport in einen Bulk-Speicher gekühlt, beim Verlassen des Bulk-Speichers orientiert und in lückenlos in Linie gebracht und anschließend in oder vor einer Schneidemaschine zur Erzeugung eines Originalitätsverschlusses endvereinzelt und geschnitten oder mit einer anderen Maschine weiterbehandelt werden. Anschließend können die Schraubverschlüsse zu Abfüllstationen weitertransportiert und in diesen auf befüllte Behälter aufgeschraubt werden. Vor und/oder nach der Schneidemaschine werden die Schraubverschlüsse einer Qualitätskontrolle unterzogen, insbesondere im Hinblick auf Farbfehler, Unterspritzer, Löcher, Grate, Anspritzpunkte, Vorhandensein und die Qualität von Gasbarriereschutzschichten oder dergleichen mehr, wobei fehlerhafte Schraubkappen ausgesondert werden. Derartige In-Line-Anlagen erreichen mittlerweile produktbezogene Verarbeitungsgeschwindigkeiten von durchaus 3.500 bis 4.000 Produkte/min oder mehr. Für Metallverschlüsse sind ähnliche Verfahrensschritte mit ähnlichen Verarbeitungsgeschwindigkeiten erforderlich.

Es ist daher besonders wichtig, die einzelnen Arbeits- oder Handlingstationen kontinuierlich mit Verschlüssen, insbesondere Schraubkappen, zu versorgen und daher entsprechende Zwischenspeicher vorzusehen. Bei dieser kontinuierlichen Versorgung ist es besonders wichtig, die bereits erfolgte Orientierung der Gegenstände auch bei der Zwischenspeicherung nicht zu verändern, so dass die mit den Gegenständen versorgten Maschinen kontinuierlich arbeiten und die hohen Verarbeitungsgeschwindigkeiten beibehalten können. Darüber hinaus ist es wichtig, die orientierten Gegenstände mit einem entsprechenden Staudruck an die Maschinen selber oder an Förderwege zu den Maschinen heranzuführen, damit diese stets und in jedem Augenblick einen Gegenstand entnehmen oder zugeführt bekommen, um keine unverschlossenen Behälter zu erhalten.

Ganz allgemein betritt die Erfindung einen Zwischenspeicher für bereits orientierte Gegenstände. Der erfindungsgemäße Zwischenspeicher weist dazu einen Gegenstandseinlass, einen rotierbaren Drehteller, einen ortsfesten spiralförmigen Speicherweg und einen Gegenstandsauslass auf, wobei entweder der Gegenstandseinlass oder der Gegenstandsauslass am Spiralursprung und der jeweils andere am Spiralende angeordnet sind. Spezieller betrifft die Erfindung einen Zwischenspeicher für in Linie angeförderte und orientierte Schraubverschlüsse, insbesondere aus Kunststoff, mit diesen Merkmalen.

Aus der WO 2008/030 937 A2 ist ein rotierender Pufferspeicher bekannt, bei dem ein angetriebener Drehteller eine drehfest mit ihm verbundene, also mit rotierende, spiralförmige Barriere aufweist, die einen Produktweg vom Außenbereich des Drehtellers zum Innenbereich definiert, wobei eine ortsfeste Brücke den Drehteller überspannt, von der aus Finger in den Produktweg ragen, um beispielsweise die Bewegungsgeschwindigkeit der Teile zu messen. Die Drehgeschwindigkeit des Drehtellers wird von einem Controller gesteuert. Nach vollständiger Befüllung erfolgt eine Leerung des Pufferspeichers, dieser arbeitet also im Batch-Modus und ist daher für das von der Erfindung abgedeckte Einsatzgebiet nicht geeignet.
Aus der US 5,234,098 A ist ein Drehteller mit nicht-drehender aber rüttelförmig bewegter Spiralbahn bekannt, der kontinuierlich mit schüttgutartigen, gefrorenen Lebensmitteln wie Erbsen mittig beschickt wird, wobei die einzelne Erbse beim Durchlaufen der rüttelförmig bewegten Spiralbahn aus zusammengefrorenen Gruppen herausgelöst und so mit zunehmendem Abstand zueinander vereinzelt werden, so dass die Erbsen nach Durchlaufen in einer einzelnen Reihe den Drehteller verlassen. Auf eine Orientierung der Erbsen kommt es bei dieser Vorrichtung aus verständlichen Gründen nicht an. EP 0 050 892 A2 offenbart einen Zwischenspeicher nach dem Oberbegriff des Anspruchs 1.

Vor diesem Hintergrund stellt sich die Erfindung die Aufgabe einer kontinuierlichen Zwischenspeicherung bereits orientierter Gegenstände, wie insbesondere Schraubverschlüsse mittels einer Vorrichtung und einem Verfahren.

Diese Aufgabe wird durch einen Zwischenspeicher nach Anspruch 1 gelöst, bei dem der spiralförmige Speicherweg eine oberhalb des Drehtellers und berührungslos zu diesem angeordnete ortsfeste Spirale aufweist. Der spiralförmige Speicherweg erlaubt eine optimale Ausnutzung einer kreisförmigen Fläche zur Zwischenspeicherung von Gegenständen. Die Spirale ist dabei eine archimedische Spirale, also eine, bei der der Radius linear mit dem Drehwinkel wächst. Dies ermöglicht eine möglichst gleichförmige Bewegung und Führung der Gegenstände im Speicherweg. Aufgrund der Bewegungslosigkeit der Spirale erhalten die Gegenstände keine Stöße oder dergleichen sondern können relativ sanft an der Spiralwand gleiten. Aufgrund der Berührungslosigkeit zum Drehteller gibt es keinen Abrieb an der Spirale oder dem Teller und auch keine bremsende Wirkung. Der Teller kann so leicht mit einer konstanten Geschwindigkeit rotieren.

In Ausgestaltung der Erfindung ist vorgesehen, dass ein Abstand der Spirale zum Drehteller einstellbar ist, insbesondere zwischen 0,25 mm und 5 mm, vorzugsweise zwischen 0,4 mm und 2 mm, insbesondere zwischen 0,5 mm und 1,75 mm beträgt. Mit Vorteil erlaubt diese Ausgestaltung eine Anpassung der Vorrichtung an andersgeformte und/oder andersbemaßte Gegenstände. Gleichzeitig kann diese Ausgestaltung die Luftströmung über dem in Einsatzbedingungen rotierenden Drehteller beeinflussen und turbulenzarm gestalten.
Ist die Spirale als archimedische Spirale ausgebildet und vorzugsweise aus einem vollen Kunststoff oder Aluminiumkörper herausgearbeitet ausgebildet, so werden Knicke, Übergänge und ungleiche Bögen, wie sie durch das Biegen von Flachmaterial unweigerlich entstehen, vermieden. Hierdurch ist eine besonders glatte Gleitbahn gegeben, die die orientierten und sich vorzugsweise in einer Linie befindlichen, einander kontaktierenden, Gegenstände, wie beispielsweise Schraubkappen, möglichst wenig bremsen oder ablenken. Die Spirale kann
auch über ein anderes Urformverfahren hergestellt sein, insbesondere mittels eines 3D-Druckes. Auch hierdurch werden Übergänge oder Knicke mit Vorteil vermieden.
In Weiterbildung der Erfindung ist vorgesehen, dass der Drehteller eine plane und/oder glatte Oberfläche aufweist und/oder mit konstanter Winkelgeschwindigkeit rotierend ausgebildet ist. Dies erleichtert das Gleiten der Gegenstände auf dem Teller.

Die Erfindung weist eine Vorrichtung zum Einblasen einer gerichteten Gasströmung auf. Mithilfe der Gasströmung ist ein zweites Antriebsmittel für die Gegenstände geschaffen, das zusammen mit dem rotierenden Drehteller dafür sorgt, dass am Gegenstandsauslass ein ausreichender Gegenstandsdruck vorherrscht, so dass eine nachfolgende HandlingStation wie eine Schneidmaschine oder eine Fördereinrichtung zu einer solchen Handlingstation, stets einen ununterbrochenen Gegenstandsstrom zur Verfügung gestellt bekommt, selbst bei fast leerem Zwischenspeicher.

Mit der Erfindung ist vorgesehen, dass die Vorrichtung zum Einblasen einer gerichteten Gasströmung drei bis 16, vom Spiralursprung radial auswärts verlaufende, Arme aufweist, wobei an einem Arm zwei oder mehr Auslassöffnungen vorgesehen sind, insbesondere nicht-orthogonal zur Drehtelleroberfläche orientierte Auslassöffnungen. Dies erlaubt ein weitestgehend homogenes Strömungsfeld innerhalb des Zwischenspeichers, so dass ein in der Spirale geführter Gegenstand praktisch während seiner gesamten Wegstrecke eine möglichst gleichgerichtete und gleichstarke Kraft in Richtung auf den Gegenstandsauslass erfährt. Durch die höhere Anzahl an Armen werden einzelne Kraftstöße vermieden, die Gegenstände gleiten gleichmäßig und laufen damit weniger Gefahr, ihre räumliche Orientierung zu verlieren oder Schaden zu nehmen oder Verklumpungen zu bilden.

Vorteilhaft ist auch, wenn die Arme einen gebogenen Verlauf aufweisen, insbesondere kreisbogenartig verlaufend sind. Hierdurch wird die Antriebsluft noch besser und homogener eingeblasen. Bei "Luft" kann es sich auch um ein Inertgas wie Stickstoff oder Argon handeln, um Druckluft, gereinigte Druckluft, Kompressorluft oder ein anderes Gas handeln.

Alternativ zu den beschriebenen Armen ist vorgesehen, dass die Vorrichtung zum Einblasen einer gerichteten Gasströmung ein oder mehrere Gasvorratsbehälter aufweist, die ihrerseits eine oder mehrere Gasauslassöffnungen, insbesondere Schlitze aufweisen. Die Gasvorratsbehälter sind dabei als zylindrische oder kastenförmige Behälter ausgebildet, die sich oberhalb der Spirale befinden und anstelle der Arme auch Tragfunktionen für diese übernehmen können aber nicht müssen. Sie können segmentiert ausgebildet sein, beispielsweise aus zwei, drei oder vier, auch einzeln abklappbaren, Teilbehältern bestehen. Der Gasvorratsbehälter weist eine oder mehrere Gasleitflächen in seinem Inneren auf. Gasbehälter und -leitflächen dienen dazu, stets ausreichend Gas zur Verfügung zu haben, Druckspitzen abzupuffern und so einen möglichst gleichförmigen Gasstrom zu ermöglichen. Die Gasauslassöffnungen, insbesondere Schlitze, sind radial verlaufend, können aber ebenso wie die zuvor beschriebenen Arme ausgestaltet sein, also insbesondere einen gebogenen Verlauf aufweisen und nicht-orthogonal zur Drehtelleroberfläche orientiert sein.

Ist erfindungsgemäß die Winkelgeschwindigkeit des Drehtellers unterschiedlich zur Ausströmgeschwindigkeit des Gases ausgebildet, insbesondere langsamer, so erfolgt ein konstanter Grundtransport der Gegenstände mittels des Drehtellers, also mit annähernd gleichbleibender Winkelgeschwindigkeit. Diesem Grundtransport überlagert ist der schnellere Transport der Gegenstände mittels des Luftstroms, so dass gebildete Lücken im Gegenstandsstrom im Speicherweg geschlossen werden und am Gegenstandsauslass stets eine ausreichende Zahl an Verschlüssen ansteht. Durch diese beiden Antriebsmittel unterschiedlicher Geschwindigkeit ist also die Versorgung des der Erfindung nachgelagerten Bearbeitungsmaschine stets sichergestellt.

Die Verfahrensaufgabe zur Zwischenspeicherung von orientierten Gegenständen zwischen zwei Weiterbehandlungen weist entsprechend Anspruch 9 folgende Schritte auf: a) Zufuhr von orientierten Gegenständen in einen Zwischenspeicher gemäß einem der vorherigen Ansprüche, b) Bewegen der orientierten Gegenstände entlang eines spiralförmigen Weges mittels eines rotierenden Drehtellers in einer ersten Geschwindigkeit, c) Überlagern der ersten Geschwindigkeit mit einer zweiten, höheren Geschwindigkeit erzeugt über Einblasen von Gas und d) Ausscheiden der orientierten Gegenstände aus dem Zwischenspeicher. Die Vorteile dieses Verfahrens wurden bereits geschildert.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind. Funktionsmäßig gleiche Teile sind dabei mit denselben Bezugszeichen versehen. Die Figuren der Zeichnung zeigen im Einzelnen:
Fig. 1: eine Aufsicht auf eine erfindungsgemäße Vorrichtung,
Fig. 2: eine Schnittansicht durch diese und
Fig. 3: eine schematische Ansicht einer dritten Ausführungsform.

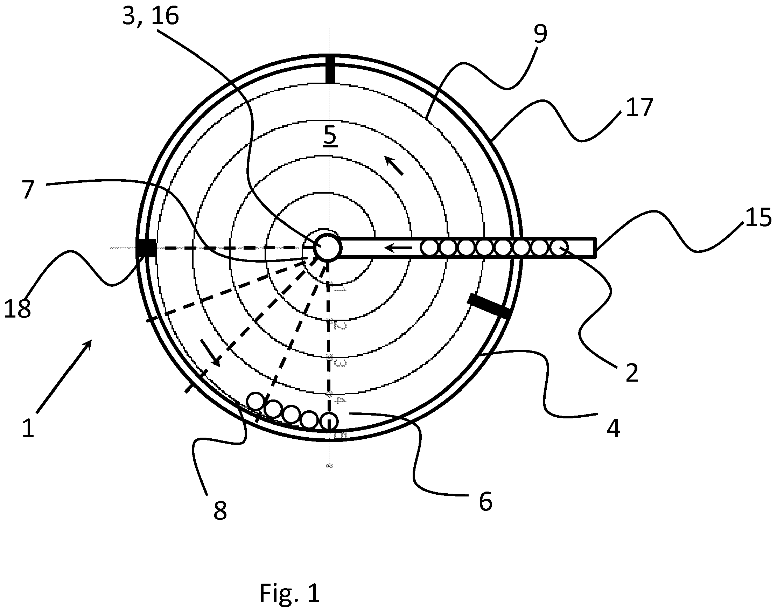

**Fig. 1** zeigt eine schematische Aufsicht auf einen erfindungsgemäßen Zwischenspeicher 1. Dieser weist hier einen Durchmesser von 1 m auf, der Durchmesser kann je nach Ausführungsform zwischen 0,5 und 2 m betragen. Bei dieser Ausführungsform ergibt sich so ein Speicherweg von ca. 9 m. Der Zwischenspeicher ist von einem Gehäuse 17 umgeben. Nicht dargestellt sind Antriebe, Versorgungsleitungen, Steuerungen, Sensoren für Luftströmung, Messung des Füllgrades des Zwischenspeichers, Transportgeschwindigkeit und ähnliche mehr.

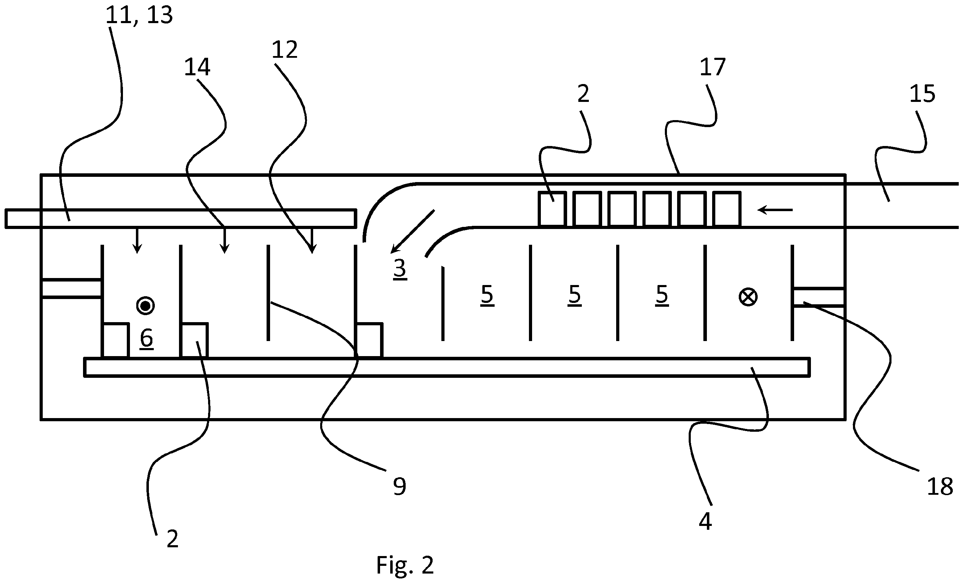

Eine nur schematisch dargestellte Zufuhr 15, beispielsweise ein (Vakuum)Förderband, führt Gegenstände 2, hier Schraubkappen, von einer nicht dargestellten Produktionsanlage mit nachfolgender Vereinzelung und Gegenstandsorientierung zu dem Gegenstandseinlass 3, der sich am Spiralursprung 7 befindet. Die vorher in die für die spätere Weiterverarbeitung richtige Orientierung verbrachten Schraubkappen gelangen über den Gegenstandseinlass 3 von oben in den Speicherweg 5, insbesondere über dessen schiefe Ebene 16, deren Neigungswinkel vorzugsweise mit zunehmender Nähe zum Speicherweg 5 zunimmt. Hierdurch wird eine relativ schonende Änderung der zunächst horizontalen in eine vertikale Bewegung der Schraubkappen erreicht, ohne dass deren Orientierung verloren gehen könnte. Alternativ könnte der Gegenstandseinlass 3 auch rein vertikal verlaufend ausgebildet sein, in diesem Fall wäre ein entsprechend orientiertes Umlenk- und Prallblech oder dergleichen vorzusehen, welches die Bewegungsrichtung der Schraubverschlüsse ändert. Ebenso erfindungsgemäß wäre eine Zufuhr der Gegenstände 2 von unterhalb des Drehtellers 4. Der Speicherweg 5 des Zwischenspeichers 1 beginnt am Spiralursprung 7 und verläuft spiralförmig auswärts bis zum Spiralende 8. Der Speicherweg 5 wird dabei gebildet durch einen Drehteller 4 und davon vertikal beabstandet einer ortsfesten, nichtdrehenden Spirale 9. Die Spirale 9 ist aus einem im Vergleich zu den Produkten abriebfesten Material mit glatter Oberfläche wie Aluminium und vorzugsweise aus einem vollen Block gearbeitet oder mittels 3D-Druck hergestellt. Letzteres stellt einen gleichförmig wachsenden Radius der Spirale sicher, ohne Stoßfugen, Wölbungen oder Knicke. Diese Störungen können bei den erforderlichen hohen Fördergeschwindigkeiten der Schraubdeckel zu örtlichen Häufungen und damit letztendlich zu einer Blockade des Speicherweges 5 führen. Wie insbesondere der **Fig. 2** zu entnehmen ist, ist zwischen Spirale 9 und Drehteller 4 ein Abstand vorgesehen, der zwischen 0,25 und 5 mm beträgt, vorzugsweise zwischen 0,4 und 2 mm, insbesondere zwischen 0,5 mm und 1,75 mm beträgt. Hierdurch können während des Betriebs möglicherweise entstehende Unebenheiten des Drehtellers 4 nicht zum Reiben an der ihm zugewandten Unterseite der Spirale 9 führen, gleichzeitig ist die Luftführung in dem Zwischenspeicher zwischen den einzelnen Windungen der Spirale 9 erleichtert (siehe unten). Die Wandstärke der Spirale 9 ist über die Spirale gleichbleibend, sie kann jedoch auch im Bereich des Spiralursprungs 7 dünner als im Bereich des Spiralendes 8 oder besser der gesamten äußersten Spiralwindung, ausgebildet sein. Dies reduziert das Gesamtgewicht der Spirale 9, ohne deren Stabilität zu beeinflussen, da die relativ gesehen mehreren Windungen am Spiralursprung den relativ gesehen wenigen Windungen am Spiralende gegenüberstehen. Über letzere erfolgt darüber hinaus auch die Montage der Spirale 9 an einem Gehäuse 17 des Zwischenspeichers 1, so dass diese über dem Drehteller schwebt. In Fig. 1 schematisch dargestellt ist die Befestigung lediglich im Randbereich der Spirale 9, jedoch ist auch eine Befestigung mittels den Speicherweg 5 überspannender oder teilüberspannender Träger möglich. Diese sind bevorzugt lösbar mit der Spirale verbunden, um diese zu Wartungs- oder Anpassungszwecken an eine neue Produktgeometrie gegen eine andere austauschen zu können. Die Spirale 9 weist hier fünf Windungen auf. Im linken unteren Quadranten der Spirale 9 sind gestrichelt fünf Arme 13 angedeutet, die zu einer Vorrichtung 11 gehören, die von oben Luft oder Stickstoff oder ein anderes Gas in den Speicherweg 5 einbläst. Die Arme 13 sind über die Grundfläche der Spirale 9 gleichverteilt. Bei anderen Ausführungsformen können andere Anzahlen und Orientierungen der Arme eingesetzt werden, insbesondere mehr oder weniger Arme als bei diesem Beispiel.
Der Drehteller 4 weist auf seiner der Spirale 5 zugewandten Seite eine glatte Oberfläche auf, beispielsweise eine - auch gehärtete - Glasplatte.
Als glatte Oberflächen sind ebenso Metallplatten oder eine Kunststoffoberfläche geeignet, letztere insbesondere dann, wenn sie abriebfest ist, wozu eine Faserverstärkung vorgesehen sein kann. Hierbei kann diese Oberfläche sowohl als Schicht auf einem Grundkörper vorgesehen sein als auch den ganzen Körper des Drehtellers bilden. Während ihres Betriebes läuft der Drehteller 4 mit konstanter Winkelgeschwindigkeit, um eine Grundbewegungsenergie für die Produkte zu liefern und deren möglichst gleichmäßigen Transport im Speicherweg 5 sicherzustellen.
Das Spiralende 8 bildet gleichzeitig den Gegenstandsauslass 6, von dem aus die zwischengespeicherten Schraubkappen an beispielsweise eine nicht dargestellte Schneidmaschine übergeben, bzw. von dieser übernommen werden. Dies erfolgt üblicherweise mit einem ggf. kämmenden Drehteller, dessen Umfang wellenartig mit Produkttaschen ausgebildet ist, in die die Schraubkappen als Produkte übernommen werden. Auch dieser Gegenstandsauslass 6 kann speziell geformt sein, also horizontal geneigt, sich verengend auf einen Schraubdeckeldurchmesser, auch einstellbar in seiner Verengung, es können andere Untergründe oder weitere Führungselemente wie eine Führung von oben vorgesehen sein, insbesondere eine federbelastete zum Niederhalten der Produkte, vorzugsweise mit Einlaufbereich/schräge. Schließlich kann die Übergabe der Produkte auch an ein Verbindungssystem erfolgen, statt unmittelbar an eine Schneidemaschine. Möglich ist ebenfalls die Übergabe an einen weiteren Transportweg, wie einen Luftkanal, der die Schraubkappen an eine Handlingstation weiterleitet und der durchaus eine Länge von 1 m oder 1,5 m aufweisen kann.
**Fig. 2** zeigt eine schematische Schnittansicht durch die erfindungsgemäße Vorrichtung 1 verlaufend durch den Kreismittelpunkt des Drehtellers 4. Zu erkennen sind die Wände des Gehäuses 17. Das Gehäuse 17 kann dabei eine Klappe aufweisen, insbesondere auf seiner Oberseite, um einen (Wartungs-)Zugang zu dem Speicherweg zu ermöglichen. Die Zufuhr 15 kann oberhalb der Vorrichtung angeordnet sein und den Gehäusedeckel von oben durchdringen oder wie skizziert, einen seitlichen Einlass in das Gehäuse 17 haben. Zu erkennen ist ebenfalls die Drehrichtung des Drehtellers 4 sowie die geschnittenen Wände der Spirale, beabstandet mit einem Luftspalt. Dieser Luftspalt ermöglicht auch den Durchtritt des Gasstromes von einer Spiralwindung in die nächste, so dass es zu einer möglichst gleichmäßigen, am besten laminaren, Strömung entlang des Speicherweges kommt. Weggelassen wurden Drehtellerantrieb, -steuerung, jegliche Sensorik, jegliche Ver- und Entsorgungsleitungen. Weggelassen wurde weiter das Maschinengestell, an oder auf dem die Vorrichtung 1 angeordnet ist.

An diesen befestigt oder angeformt sind Tragarme 18, die die Spirale 9 tragen und schwebend beabstandet über dem Drehteller 4 halten. Auch hier ist wieder nur die Befestigungssituation seitlich an der äußersten Windung der Spirale dargestellt, andere Befestigungsorte und -arten sind ebenfalls möglich, wie beispielsweise hängend an einem Gestell oder außerhalb des Drehtellers aufgeständert.

Oberhalb der vom Drehteller 4 weg weisenden Kante der Spirale 9 ist eine Vorrichtung 11 angeordnet. Diese weist Arme 13 mit Auslassöffnungen 14 auf, aus denen eine Gasströmung austritt, insbesondere eine Luftströmung. Obwohl hier senkrecht gezeichnet, ist die Auslassrichtung des Luft- oder Stickstoffstromes bevorzugt schräg nach unten gerichtet, um den Schraubdeckeln 2 auch eine Kraftkomponente in Vorschubrichtung mitzugeben. Möglich ist anstelle eines festen Winkels auch ein einstellbarer, der von fast senkrecht bis zu fast waagerecht geht oder auch einer, der in diesem Bereich während des Betriebes gesteuert und kontrolliert eingestellt wird. Die Arme 13 sind hier radial gleichförmig angeordnet mit einem Winkelabstand von 45° zwischen zwei benachbarten Armen. Ebenfalls möglich sind Winkelabstände von 45°, 60°, 72°, 90°, 120° und 180° oder in anderen Worten 8 bis 18 Arme. Hierbei ist ein Gleichgewicht zwischen möglichst gleichförmiger und gleichstarker Luftströmung in jedem Abschnitt des Speicherweges und zu hohem konstruktiven Aufwand und zu großer Erschwernis eines Eingriffes von oben in den Speicherweg zu wählen. Letztere sind immer dann erforderlich, wenn es dennoch zu Blockaden des Speicherweges gekommen ist und diese manuell aufgelöst werden müssen. Nicht dargestellt ist der Anschluss der Arme 13 an eine Gasversorgung, diese kann zentral für alle Arme oder dezentral für einen oder eine Gruppe von Armen erfolgen.

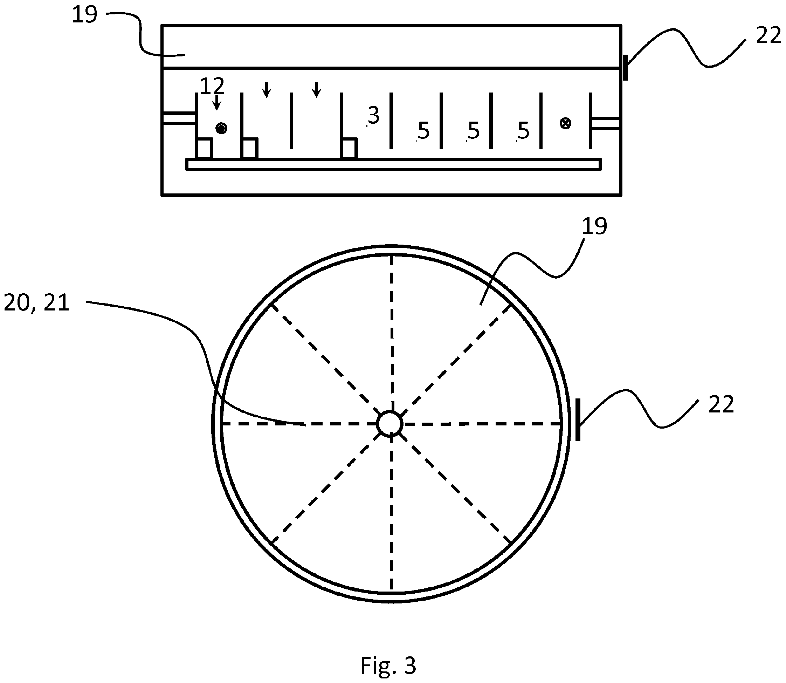

**Fig. 3** zeigt schematisch eine weitere Ausführungsform mit einem Gasvorratsbehälter 19. Dieser weist hier nur ein Segment auf, welches um ein Scharnier 22 abklappbar ist. Der auf den Drehteller 4 gerichtete Boden des Gasvorratsbehälters 19 weist Schlitze 21 auf, die radial und nicht-orthogonal zur Ebene des Drehtellers 4 gerichtet sind.

Wie bereits erwähnt, kann der erfindungsgemäße Speicher in einen Transportweg eingebunden sein, insbesondere in einen aus Luftkanälen, auch Jetstreams genannt. In diesem Fall werden die Produkte über den Transportweg an den Speicher heran und von diesem weg transportiert. Hierdurch kann der erfindungsgemäße Speicher an jedem passenden Ort aufgestellt sein und muss nicht unmittelbar an den anderen Baugruppen der In-Line-Anlage angeordnet sein.

### BEZUGSZEICHENLISTE

- 1: Zwischenspeicher
- 2: Gegenstand
- 3: Gegenstandseinlass
- 4: Drehteller
- 5: Speicherweg
- 6: Gegenstandsauslass
- 7: Spiralursprung
- 8: Spiralende
- 9: Spirale
- 10:
- 11: Vorrichtung
- 12: Gasströmung
- 13: Arm
- 14: Auslassöffnung
- 15: Zufuhr
- 16: Schiefe Ebene
- 17: Gehäuse
- 18: Tragarm
- 19: Gasvorratsbehälter
- 20: Gasauslassöffnung
- 21: Schlitz
- 22: Scharnier

## Patentansprüche

1. Zwischenspeicher (1) für vereinzelte und orientierte Gegenstände (2), aufweisend einen Gegenstandseinlass (3), einen rotierbaren Drehteller (4), einen spiralförmigen Speicherweg (5) und einen Gegenstandsauslass (6), wobei entweder der Gegenstandseinlass (3) oder der Gegenstandsauslass (6) am Spiralursprung (7) und der jeweils andere am Spiralende (8) angeordnet sind, wobei der spiralförmige Speicherweg (5) eine oberhalb des Drehtellers (4) und berührungslos zu diesem angeordnete ortsfeste Spirale (9) aufweist, **dadurch gekennzeichnet, dass** er eine Vorrichtung (11) zum Einblasen einer gerichteten Gasströmung (12) als zweites Antriebsmittel für die Gegenstände aufweist, wobei die Winkelgeschwindigkeit des Drehtellers (4) unterschiedlich zur Ausströmgeschwindigkeit des Gases ausgebildet ist, wobei die Vorrichtung (11) zum Einblasen einer gerichteten Gasströmung (12) drei bis 16 vom Spiralursprung (7) radial auswärts verlaufende Arme (13) aufweist, wobei an einem Arm (13) zwei oder mehr Auslassöffnungen (14) vorgesehen sind.

2. Zwischenspeicher (1) gemäß Anspruch 1, **dadurch gekennzeichnet, dass** ein Abstand der Spirale (9) zum Drehteller (4) einstellbar ist, insbesondere zwischen 0,25 mm und 5 mm, vorzugsweise zwischen 0,4 mm und 2 mm, insbesondere zwischen 0,5 mm und 1 mm beträgt.

3. Zwischenspeicher (1) nach Anspruch 1 oder 2, **dadurch gekennzeichnet, dass** die Spirale (9) als archimedische Spirale ausgebildet ist und vorzugsweise aus einem vollen Kunststoff oder Aluminiumkörper herausgearbeitet ausgebildet ist.

4. Zwischenspeicher (1) nach einem der vorhergehenden Ansprüche, **dadurch gekennzeichnet, dass** der Drehteller (4) eine plane und/oder glatte Oberfläche aufweist und/oder mit konstanter Winkelgeschwindigkeit rotierend ausgebildet ist.

5. Zwischenspeicher (1) nach einem der vorhergehenden Ansprüche, **dadurch gekennzeichnet,** dass-nicht-orthogonal zur Drehtelleroberfläche (10) orientierte Auslassöffnungen (14) vorgesehen sind.

6. Zwischenspeicher (1) nach einem der vorhergehenden Ansprüche, **dadurch gekennzeichnet, dass** die Arme einen gebogenen Verlauf aufweisen, insbesondere kreisbogenartig verlaufend sind.

7. Zwischenspeicher (1) nach einem der Ansprüche 1 bis 6, **dadurch gekennzeichnet, dass** die Vorrichtung (11) zum Einblasen einer gerichteten Gasströmung (12) ein oder mehrere Gasvorratsbehälter (19) aufweist, die ihrerseits eine oder mehrere Gasauslassöffnungen (20), insbesondere Schlitze (21) aufweisen.

8. Zwischenspeicher (1) nach einem der vorhergehenden Ansprüche, **dadurch gekennzeichnet, dass** der Gegenstandseinlass (3) von der der Spirale (9) abgewandten Seite des Drehtellers (4) erfolgend ist.

9. Verfahren zur Zwischenspeicherung von orientierten Gegenständen zwischen zwei Weiterbehandlungen mit den Schritten: a) Zufuhr von orientierten Gegenständen in einen Zwischenspeicher gemäß einem der vorherigen Ansprüche, b) Bewegen der orientierten Gegenstände entlang eines spiralförmigen Weges mittels eines rotierenden Drehtellers in einer ersten Geschwindigkeit, c) Überlagern der ersten Geschwindigkeit mit einer zweiten, höheren Geschwindigkeit erzeugt über Einblasen von Gas und d) Ausscheiden der orientierten Gegenstände aus dem Zwischenspeicher.

## Claims

1. Intermediate store (1) for individual and orientated objects (2), comprising an object inlet (3), a rotatable turntable (4), a spiral storage path (5) and an object outlet (6), wherein one of either the object inlet (3) or the object outlet (6) is arranged at the spiral origin (7) and the other is arranged at the spiral end (8), wherein the spiral-shaped storage path (5) comprises a stationary spiral (9) arranged above the turntable (4) and in a contactless manner thereto,
**characterised in that** it has a device (11) for blowing in a directed gas flow (12) as a second actuating means for the objects, wherein the angular speed of the turntable (4) is different from the outflow speed of the gas, wherein the device (11) for blowing in a directed gas flow (12) comprises three to 16 arms (13) extending radially outwards from the spiral origin (7), wherein one or more outlet openings (14) are provided on an arm (13).

2. Intermediate store (1) according to claim 1 **characterised in that** a distance between the spiral (9) and the turntable (4) can be adjusted and is, in particular, between 0.25 mm and 5 mm, preferably between 0.4 mm and 2 mm, more particularly between 0.5 mm and 1 mm.

3. Intermediate store (1) according to claim 1 or 2 **characterised in that** the spiral (9) is designed as an Archimedes screw and is preferably elaborated from a solid plastic or aluminium body.

4. Intermediate store (1) according to any one of the preceding claims **characterised in that** the turntable (4) has a planar and/or smooth surface and/or is designed to rotate at a constant angular speed.

5. Intermediate store (1) according to any one of the preceding claims **characterised in that** outlet openings (14) are provide which are non-orthogonally orientated to the turntable surface (10).

6. Intermediate store (1) according to any one of the preceding claims **characterised in that** the arms extend in a curved manner, more particularly in an arc-like manner.

7. Intermediate store (1) according to any one of claims 1 to 6 **characterised in that** the device (11) for blowing in a directed gas flow (12) comprises one or more gas storage containers (19) which in turn have one or more gas outlet openings (20), in particular slits (21).

8. Intermediate store (1) according to any one of the preceding claims **characterised in that** the object inlet (3) is on the side of the turntable (4) facing away from the spiral (9).

9. Method of intermediately storing orientated objects between two further processes, with the steps: a) feeding of orientated objects into an intermediate store according to any one of the preceding claims, b) moving the oriented objects along a spiral-shaped path by means of a rotating turntable at a first speed, c) superimposing on the first speed a second, higher, speed produced via the blowing in of gas, and d) discharging the orientated objects from the intermediate store.

## Revendications

1. Accumulateur intermédiaire (1) destiné à des objets (2) désolidarisés et orientés, comportant une entrée d'objets (3), un plateau tournant (4) rotatif, un trajet d'accumulation (5) en forme de spirale et une sortie d'objets (6), soit l'entrée d'objets (3) ou la sortie d'objets (6) étant placée à la naissance de la spirale (7) et l'autre respective à la fin de la spirale (8), le trajet d'accumulation (5) en forme de spirale comportant une spirale (9) stationnaire, placée au-dessus du plateau tournant (4) et sans contact avec celui-ci,
**caractérisé en ce qu'**il comporte un dispositif (11), destiné à insuffler un flux gazeux (12) dirigé, en tant que deuxième moyen d'entraînement pour les objets, la vitesse angulaire du plateau tournant (4) étant conçue pour être différente de la vitesse de sortie du gaz, le dispositif (11) d'insufflation d'un flux gazeux (12) dirigé comportant de trois à 16 bras (13) s'écoulant de la naissance de la spirale (7) vers le haut, en direction radiale, sur un bras (13) étant prévus deux orifices de sortie (14) ou plus.

2. Accumulateur intermédiaire (1) selon la revendication 1, **caractérisé en ce qu'un** écart entre la spirale (9) et le plateau tournant (4) est réglable, et s'élève notamment à entre 0,25 mm et 5 mm, de préférence à entre 0,4 mm et 2 mm, notamment à entre 0,5 mm et 1 mm.

3. Accumulateur intermédiaire (1) selon la revendication 1 ou 2, **caractérisé en ce que** la spirale (9) est conçue sous la forme de spirale d'Archimède et est conçue de préférence en une matière plastique pleine ou en étant élaborée à partir d'un corps en aluminium.

4. Accumulateur intermédiaire (1) selon l'une quelconque des revendications précédentes, **caractérisé en ce que** le plateau tournant (4) comporte une surface plane et/ou lisse et/ou est conçu en rotation à vitesse angulaire constante.

5. Accumulateur intermédiaire (1) selon l'une quelconque des revendications précédentes, **caractérisé en ce que** des orifices de sortie (14) orientés de manière non orthogonale à la surface du plateau tournant (10) sont prévus.

6. Accumulateur intermédiaire (1) selon l'une quelconque des revendications précédentes, **caractérisé en ce que** les bras présentent un tracé curviligne, notamment du type d'un arc de cercle.

7. Accumulateur intermédiaire (1) selon l'une quelconque des revendications 1 à 6, **caractérisé en ce que** le dispositif (11) d'insufflation d'un flux gazeux (12) dirigé comporte un ou plusieurs réservoir(s) de stockage de gaz (19), qui pour leur part comportent un ou plusieurs orifice(s) de sortie du gaz (20), notamment des fentes (21).

8. Accumulateur intermédiaire (1) selon l'une quelconque des revendications précédentes, **caractérisé en ce que** l'entrée d'objets (3) s'effectue au départ du côté du plateau tournant (4) qui est opposé à la spirale (9).

9. Procédé, destiné à l'accumulation intermédiaire d'objets orientés entre deux traitements ultérieurs, comportant les étapes consistant à : a) Amener des objets orientés dans un accumulateur intermédiaire selon l'une quelconque des revendications précédentes, b) Déplacer les objets orientés le long d'un trajet en forme de spirale au moyen d'un plateau tournant en rotation à une première vitesse, c) Superposer à la première vitesse une deuxième vitesse plus élevée, générée par insufflation de gaz et d) Évacuer les objets orientés de l'accumulateur intermédiaire.
